# EUROPÄISCHE PATENTANMELDUNG

(11) **EP 1 729 071 A2**
(43) Veröffentlichungstag der Anmeldung: **06.12.2006**
(21) Anmeldenummer: 06010875.0
(22) Anmeldetag: 26.05.2006
(51) Int. Cl.: F24D 19/10

(54) **Verfahren zum Betreiben eines Wärmeerzeugers mit Solaranlage**

(30) Priorität: 03.06.2005 DE 102005025524
(71) Anmelder: ROBERT BOSCH GMBH, 70442 Stuttgart (DE)
(72) Erfinder: Lustig, Konrad, Dr., 73730 Esslingen (DE)

(57) **Zusammenfassung**

Es wird ein Verfahren zum Betreiben eines Wärmeerzeugers mit einer Solaranlage zur Warmwasserbereitung und/oder Gebäudebeheizung vorgeschlagen. Die Solaranlage weist mindestens einen Solarkollektor auf, der an einen Solarkreis angeschlossen ist, in dem eine Solarflüssigkeit als wärmeübertragendes Medium zirkuliert, wobei mittels der Solarflüssigkeit die aus der Solarenergie gewonnen Wärme auf das Wasser eines Warmwasserspeichers zur Warmwasserbereitung und/oder auf das Heizmedium eines Heizungskreises zur Gebäudebeheizung übertragen wird. Die Temperatur des Wasser im Warmwasserspeicher und/oder die Temperatur des Heizmediums werden jeweils auf einen Solltemperaturwert geregelt, wobei ein zu erwartender Solarertrag der Solaranlage berücksichtigt wird. Zur Vorausbestimmung des zu erwartenden Solarertrages wird die nächtliche Wärmeabstrahlung des Solarkollektors herangezogen. Die nächtliche Wärmeabstrahlung des Solarkollektors wird durch einen Temperaturdifferenzwert gebildet, der aus der Temperatur des Solarkollektors und der Umgebungstemperatur des Solarkollektors abgeleitet wird. Anhand des zu erwartenden Solarertrages wird der Solltemperaturwert auf einen korrigierten Solltemperaturwert reduziert.

## Beschreibung

Die Erfindung betrifft ein Verfahren zum Betreiben eines Wärmeerzeugers mit einer Solaranlage zur Warmwasserbereitung und/oder Gebäudebeheizung nach dem Oberbegriff des Anspruchs 1.

### Stand der Technik

Solaranlagen zur Warmwasserbereitung und/oder zur Gebäudebeheizung weisen Sonnenkollektoren auf, die an einen Solarkreis mit einer Solarflüssigkeit als Wärmeträgermedium angeschossen sind, mit dem die Solarwärme auf einen Warmwasserspeicher und/oder auf einen Heizungskreislauf der Gebäudebeheizung übertragen wird.

Da die Solarenergie nicht unbegrenzt zu Verfügung steht, erfolgt bei Solaranlagen zur Warmwasserbereitung ein Nachladen des Warmwasserspeichers mittels eines Wärmeerzeuger. Bei Solaranlagen zur Gebäudebeheizung erfolgt eine Heizungsunterstützung für einen Wärmeerzeuger durch Zuheizen mittels der Solaranlage. Als Wärmeerzeuger dienen dabei in der Regel Heizgerät, die als Energieträger fossile Bennstoffe einsetzen.

Um einen günstigen Wirkungsgrad der Solaranlage zu erzielen, ist es wichtig, dass zum Aufheizen des Warmwasserspeichers und/oder zur Heizungsunterstützung vorrangig die Solarenergie genutzt wird. Dadurch kann der Energieanteil des Wärmeerzeugers aus fossilen Energieträgern möglichst gering gehalten werden.
Zur Optimierung des Ertrags von Solaranlagen ist beispielsweise aus DE 43 33 596 C1 bekannt, aus der Temperatursteigerung anhand des aktuellen Solarertrages am Vortag auf die Situation des aktuellen Tages zu schließen. Je nach dem zu erwartenden Aufheizbeginn durch die Solaranlage wägt ein Regler ab, ob ein Nachheizen des Warmwasserspeichers durch einen Wärmeerzeuger bzw. Heizkessel notwendig ist.

Eine Aufladeregelung für einen Warmwasserspeichers ist aus DE 195 24 352 A1 bekannt, bei der ein Hinzuschalten des Wärmeerzeugers nur dann erfolgt, wenn die vorgegebene Solltemperatur bis zum Beginn der Hauptentnahme nicht ausreicht. Zu diesem Zweck wird die Temperatursteigerung im Warmwasserspeicher ermittelt und anhand des Temperaturgradienten die bis zu diesem Zeitpunkt erreichte Temperatur unter Anwendung einer Fuzzy-Logik als Kriterium für das Nachladen mittels des Wärmeerzeugers herangezogen.

Bei einem aus DE 198 56 344 C1 bekannten Verfahren zum Regeln der Nachladung eines Warmwasserspeichers wird der Sollwert der Warmwassertemperatur nach dem aktuellen Solarertrag und/oder nach der eingespeisten Energie im Warmwasserspeicher eingestellt. Dabei wird der Solarertrag mit zwei Temperaturfühlern im unteren und oberen Bereich des Warmwasserspeichers bestimmt, indem jeweils die Änderung der Temperaturen pro Zeiteinheit erfasst und addiert werden. Ist die Änderung positiv, wird der Sollwert der Warmwassertemperatur um einen bestimmten Betrag abgesenkt.

Aufgabe der vorliegenden Erfindung ist es, den Wirkungsgrad von Solaranlagen weiter zu erhöhen, indem ein zu erwartender Solarertrag vorausbestimmt wird und der zu erwartende Solarertrag beim Nachheizen durch den Wärmeerzeuger und/oder bei der Gebäudebeheizung berücksichtigt wird.

### Vorteile der Erfindung

Die Aufgabe der Erfindung wird mit den kennzeichnenden Merkmalen des Anspruchs 1 gelöst. Mit dem erfindungsgemäßen Verfahren wird mit einfachen Mitteln eine Steuerung bzw. Regelung für einen Wärmeerzeuger ermöglicht, die den zu erwartenden Solarertrag berücksichtigt, indem die entsprechenden Solltemperaturen des Wärmeerzeugers um den Energieertrag des zu erwartenden Solarertrages reduziert werden.

Die Anwendung des Verfahrens zur Warmwasserbereitung sieht vor, dass das Nachladen des Warmwasserspeichers durch Hinzuschalten des Wärmeerzeugers soweit unterbunden wird, wie der zu erwartende Solarertrag die notwendige Erwärmung des Wassers im Warmwasserspeicher vornimmt. Dadurch wird bei der Warmwasserbereitung ein besserer Wirkungsgrad der Solaranlage erzielt, indem zum Aufheizen des Warmwasserspeichers vorrangig die Solarenergie genutzt wird.

Die Berücksichtigung des zu erwartenden Solarertrages hinsichtlich der Gebäudebeheizung zielt darauf ab, die Erwärmung der Räume durch den passiven Strahlungsgewinn, der in den Räumen zu einer zusätzlich Erwärmung beiträgt, zu berücksichtigen. Dies geschieht dadurch, dass die Solltemperatur des Heizungskreises auf den korrigierten Solltemperaturwert zumindest annähenden um den Betrag reduziert wird, den der passive Strahlungsgewinn zur Aufheizung der Räume beiträgt. Dadurch wird eine Überhitzung der Räume durch die Solarstrahlung, die durch den zu erwartenden Solarertrag erreicht wird, verhindert.

Vorteilhafte Weiterbildungen der Erfindung sind durch die Maßnahmen der Unteransprüche möglich. Zur Durchführung des Verfahrens eignet sich besonders die Heranziehung eines die nächtliche Wärmeabstrahlung des Solarkollektors berücksichtigenden Parameters. Der die Wärmeabstrahlung des Solarkollektors berücksichtigende Parameter wird vorteilhaft durch einen Temperaturdifferenzwert gebildet. Dazu wird die Temperatur des Solarkollektors und die Umgebungstemperatur des Solarkollektors über eine vorbestimmte Zeitspanne ermittelt. Aus den ermittelten Werten der Temperatur des Solarkollektors wird ein Mittelwert der Kollektortemperatur und aus der erfassten Umgebungstemperatur des Solarkollektors ein weiterer Mittelwert der Umgebungstemperatur gebildet. Aus der Differenz der beiden Mittelwerte wird dann der Temperaturdifferenzwert berechnet. Zur Ermittlung der Umgebungstemperatur des Solarkollektors wird zweckmäßigerweise die Außentemperatur herangezogen, die beispielsweise bei einer witterungsgeführten Heizungsregelung durch einen Außentemperaturfühler aufgenommen wird.

Eine Vorhersage des zu erwartenden Solarertrages lässt sich auf einfache Weise dadurch erzielen, wenn die Temperatur des Solarkollektors und die Außentemperatur über eine vorbestimmte Zeitspanne in der vorausgegangen Nacht, vorzugsweise jeweils zwischen 4 Uhr und 6 Uhr morgens, herangezogen wird.

Besonders zweckmäßig lässt sich das Verfahren realisieren, indem der korrigierte Solltemperaturwert für eine abzusenkende Solltemperatur anhand einer vorab gebildeten Steuerkennlinie ermittelt wird. Der Bildung der Steuerkennlinie wird eine lineare Abhängigkeit zwischen der am Tag zu erwartenden normierten Tagessolarstrahlungsmenge (0 = keine Einstrahlung 1 = maximale Einstrahlungsmenge) und dem Temperaturdifferenzwert zugrundegelegt. Vorteilhaft ist es, wenn jahreszeitbedingt mindestens zwei Steuerkennlinien verwendet werden, wobei die eine Steuerkennlinie für einen Jahreszeitabschnitt mit einer mittleren Außentemperatur < 10°C und die zweite Steuerkennlinie für einen Jahreszeitabschnitt mit einer mittleren Außentemperatur > 10°C zugrundegelegt wird.

Da die maximale Energiemenge abhängig von Ort und Ausrichtung der Kollektoren ist, empfiehlt sich die Steuerkennlinie aus dem tagsüber ermittelten Solarertrag zu adaptieren, indem die maximale Einstrahlungsmenge erfasst wird. Zweckmäßig ist in die Steuerung implementiert, dass die Steuerkennlinie selbstlernend unter Heranziehung eines tagsüber ermittelten Solarertrages korrigiert wird. In diesem Fall ist jedoch eine regelungstechnische Abschätzung des Solarertrages notwendig. Alternativ kann aber auch durch den Anlagenbetreiber über einen Regelparameter die Größe des Einflusses der Absenkung eingestellt werden.

Unter Zugrundelegung der Steuerkennlinie kann mit einfachen Mitteln eine Absenkung der Solltemperatur des Warmwasserspeichers der Warmwasserbereitung und/oder eine Absenkung der Solltemperatur des Heizungskreises zur Gebäudebeheizung erfolgen. Im letzteren Fall ist es zweckmäßig, wenn zusätzlich zur Absenkung der Solltemperatur des Heizungskreises, insbesondere der Vorlauftemperatur, eine Abschätzung des momentanen Ertrages der Solaranlage berücksichtigt wird und anhand dieser Abschätzung eine weitere Anpassung der Solltemperatur des Heizungskreises erfolgt.

### Ausführungsbeispiele

Ausführungsbeispiele der Erfindung sind in der Zeichnung dargestellt und in der nachfolgenden Beschreibung näher erläutert.

Es zeigen:
- Figur 1: eine Prinzipdarstellung einer Heizanlage mit einem Heinzgerät und einer Solaranlage zur Warmwasserbereitung,
- Figur 2: eine Darstellung einer Steuerkennlinie und
- Figur 3: eine Darstellung von Temperaturverläufen.

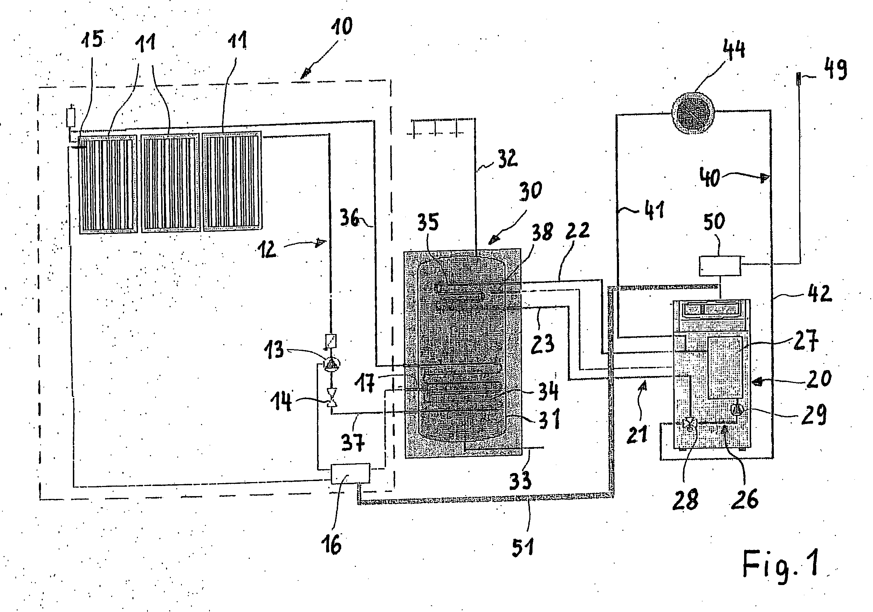

Die in Figur 1 dargestellte Heizanlage zur Warmwasserbereitung und Gebäudebeheizung weist eine Solaranlage 10 und ein Heizgerät 20 als Wärmeerzeuger auf, das die Wärmeenergie durch eine Verbrennung fossiler Energieträger, beispielsweise Gas bezieht. Weiterhin verfügt die Heizanlage über eine Warmwasserbereitungsanlage 30 und einen Heizungskreis 40 zur Gebäudebeheizung. Die Solaranlage 10 wird in dem in Figur 1 dargestellten Ausführungsbeispiel nur zur Warmwasserbereitung eingesetzt. Es ist aber genauso möglich, die Solaranlage 10 sowohl zur Warmwasserbereitung als auch zur Gebäudebeheizung oder nur zur Gebäudebeheizung einzusetzen.

Die Solaranlage 10 umfasst Solarkollektoren 11, die an einen Solarkreis 12 angeschlossen sind. Im Solarkreis 12, in dem eine Solarflüssigkeit als Wärmeträgermedium zirkuliert, ist eine Solarkreis-Umwälzpumpe 13 und ein Solarkreisventil 14 angeordnet. An mindestens einem der Solarkollektoren 11 ist ein Temperaturfühler 15 zur Erfassung der Temperatur des Solarkollektors angeordnet, wobei der Temperaturfühler 15 an der Oberfläche des Absorbers des Solarkollektors 11 angebracht ist und damit die Kollektortemperatur bzw. Absorbertemperatur direkt misst. Der Temperaturfühler 15 kann aber auch in den Solarkollektor 11 hineinragen und die Temperatur der Solarflüssigkeit erfassen, wobei dann die Kollektortemperatur über die Temperatur der Solarflüssigkeit bestimmt wird. Die Solaranlage 10 verfügt ferner über eine Steuereinrichtung 16, die über Signalleitungen mit dem Temperaturfühler 15, mit einem dem unteren Bereich des Warmwasserspeichers 30 zugeordneten unteren Temperaturfühler 17 und mit der Solarkreis-Umwälzpumpe 13 verbunden ist.

Die Warmwasserbereitungsanlage 30 weist einen Warmwasserspeicher 31 auf mit einer Brauchwasserentnahmeleitung 32, einem Anschluss 33 zur Kaltwasserzufuhr sowie einem ersten Wärmetauscher 34 im unteren Bereich und einem zweiten Wärmetauscher 35 im oberen Bereich des Warmwasserspeichers 31. Der erste Wärmetauscher 34 ist an den Solarkreis 12 mit einer Vorlaufleitung 36 und einer Rücklaufleitung 37 angeschlossen. Der zweite Wärmetauscher 35 ist zur Beheizung des Warmwasserspeichers 31 an einen Brauchwasserladekreis 21 des Heizgerätes 20 mit einer Vorlaufleitung 22 und einer Rücklaufleitung 23 angeschlossen. Dem zweiten Wärmetauscher 35 ist im oberen Bereich des Warmwasserspeichers 31 ein oberer Temperaturfühler 3 8 zugeordnet.

Zum Heizgerät 20 gehört ferner ein interner Heizkreis 26 mit einem Primärwärmetauscher 27, einem Drei-Wege-Ventil 28 sowie einer Umwälzpumpe 29. Der interne Heizkreis 26 ist mit dem Heizungskreis 40, der über Raumheizkörpern 44 verfügt, verbunden, wobei der Heizungskreis 40 eine Vorlaufleitung 41 und eine Rücklaufleitung 42 umfasst. Das Heizgerät 20 verfügt weiterhin über eine Steuer-/Regeleinrichtung 50 zur witterungsgeführten Regelung des Heizgerätes 20 bezüglich der Beheizung der Raumheizkörper 44. Zur witterungsgeführten Regelung des Heizgerätes 20 ist ein weiterer Temperaturfühler 49 vorgesehen, der die Außentemperatur erfasst. Die Steuer-/Regeleinrichtung 50 des Heizgerätes 20 steht beispielsweise über Signalleitungen mit dem Temperaturfühler 48 und dem weiteren Temperaturfühler 49 in Verbindung und kommuniziert über eine Signal-Bus-Verbindung 51 mit der Steuereinrichtung 16 der Solaranlage 10.

Die Temperatur der Solarflüssigkeit im Solarkreis 10 ändert sich tagsüber je nach Bewölkung am Himmel ständig. Nachts verliert die Solarflüssigkeit im Solarkreis 12 insbesondere Wärme durch Wärmeabstrahlung am Solarkollektor 11. Die Wärmeabstrahlung ist dabei abhängig von der Temperaturdifferenz, wobei bei klaren Nächten regelmäßig eine tiefere Temperatur am Absorber des Kollektors vorliegt als bei einem nächtlich bewölkten Himmel. Dies ist dadurch begründet, dass der Absorber im Strahlungsaustausch mit dem deutlich kälteren Nachthimmel steht und dadurch unter die Umgebungstemperatur auskühlt. Hieran knüpft die Erfindung an und macht sich den Umstand zur Nutze, dass statistisch betrachtet in den meisten Fällen auf eine klare Nacht ein sonniger Tag mit einem zu erwartenden hohen Solarertrag folgt. Dazu ist in der Steuereinrichtung 16 der Solaranlage 10 beispielsweise für den Herbst/Winter- und den Frühling/Sommer- Betrieb jeweils eine Steuerkennlinie hinterlegt.

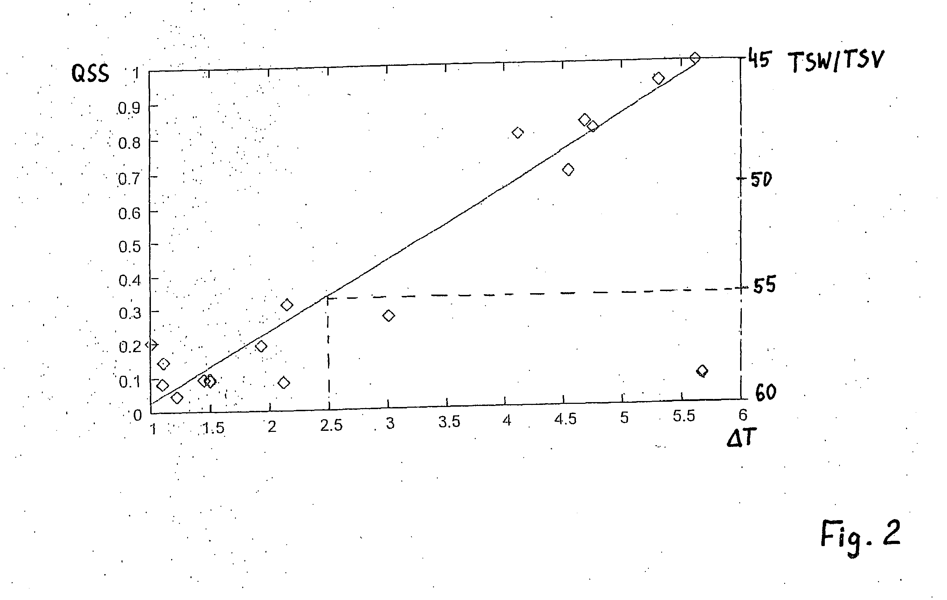

Ein Beispiel für eine derartige Steuerkennlinie ist in Figur 2 angegeben, die beispielsweise den Herbst/Winter-Betrieb repräsentiert. Die Steuerkennlinie wurde vorher experimentell ermittelt und ist in der Steuereinrichtung 16 abgelegt. Dazu wurde die täglich identifizierten normierten Tagessolarstrahlungssummen QSS in Abhängigkeit eines nächtlich ermittelten Temperaturdifferenzwertes ΔT aufgetragen. Die normierte Tagessolarstrahlungssummen QSS wurde durch das Verhältnis der Strahlungssumme für den aktuellen Tag (Q_tag) zur maximal möglichen täglichen Strahlungssumme (Q_tag_max) ermittelt.

Zur Bestimmung des zu erwartenden Solarertrages wird ein die Wärmeabstrahlung des Solarkollektors berücksichtigender Parameter herangezogen. Der die Wärmeabstrahlung des Solarkollektors berücksichtigende Parameter wird zweckmäßigerweise durch den bereits erwähnten Temperaturdifferenzwert repräsentiert, der über die Temperatur des Solarkollektors und über die Umgebungstemperatur des Solarkollektors ermittelt wird. Dazu wird über eine vorbestimmte Zeitspanne die Temperatur des Solarkollektors und über die gleiche Zeitspanne die Umgebungstemperatur des Solarkollektors erfasst. Aus den erfassten Temperaturen wird ein Mittelwert der Kollektortemperatur und ein Mittelwert der Umgebungstemperatur berechnet. Aus der Differenz der beiden Mittelwerte wird schließlich der Temperaturdifferenzwert ΔT gebildet. Die zur Ermittlung des Temperaturdifferenzwertes ΔT notwendige Temperatur des Solarkollektors und Umgebungstemperatur des Solarkollektors wird jeweils für einen bestimmten Zeitraum in der Nacht, beispielsweise von 4 bis 6 Uhr ermittelt. Die Temperatur des Solarkollektors wird mittels des Temperaturfühler 15 am Solarkollektor 11 als Kollektortemperatur TK erfasst. Als Umgebungstemperatur des Solarkollektors wird die mittels des Temperaturfühlers 49 der witterungsgeführten Heizungsregelung gemessene Außentemperatur TA herangezogen. Der Temperaturdifferenzwert ΔT aus dem Mittelwert der Kollektortemperatur TK und dem Mittelwert der Außentemperatur TA ist proportional zu der am folgenden Tag zu erwartenden Tagessolarstrahlungssumme, wobei in eine Herbst/Winter-Jahreszeit mit einer mittleren Außentemperatur zwischen vier Uhr und sechs Uhr mit < 10°C und einer Frühling/Sommer-Jahreszeit mit einer mittleren Außentemperatur zwischen vier Uhr und sechs Uhr > 10°C unterschieden wird. Es ist aber auch denkbar, die Wärmeabstrahlung mittels eines Strahlungspyranometers direkt zu bestimmen.

Bei dem in Figur 2 dargestellten Beispiel lag eine durchschnittliche Außentemperatur TA von +/- 0 °C und eine durchschnittliche Kollektortemperatur von -2,5 °C vor, was zu einem durchschnittlichen Temperaturdifferenzwert ΔT von 2,5 K führt. Dem Temperaturdifferenzwert 2,5 ist anhand der Steuerkennlinie eine korrigierter Solltemperaturwert TSW für das Warmwasser der Warmwasserbereitungsanlage 30 von 55 °C zugeordnet. Die Steuereinheit 16 teilt über die Bus-Verbindung 51 den korrigierten Solltemperaturwert TSW der Steuer-/und Regeleinrichtung 50 mit, die dann den Solltemperaturwert für die Warmwasserbereitung von beispielsweise 60 °C auf 55 °C reduziert.

Bei einer Anwendung des Verfahrens für die Warmwasserbereitung wird das Heizgerät derart betrieben, indem die eingestellte und gewünschte Solltemperatur des Warmwassers im Warmwasserspeicher 31, die am oberen Temperaturfühler 38 geführt wird, auf den anhand der Steuerkennlinie ermittelten Solltemperaturwert TSW reduziert wird. Die Differenz zwischen dem korrigierten Temperatursollwert TSW von beispielsweise 55 °C und dem gewünschtem Solltemperaturwert von beispielsweise 60 °C wird durch den zu erwartenden Solareintrag ausgeglichen. Dadurch wird die noch nicht vorliegende, jedoch zu erwartende Solarenergie ausgenutzt, wodurch sich der Wirkungsgrad der Solaranlage erhöht. Die Regelung der Warmwassertemperatur der Wasserbereitungsanlage 30 ist dabei so gestaltet, dass beispielsweise eine Absenkung der Solltemperatur nicht unter eine Brauchwassertemperatur von 45°C erfolgen kann. Darüber hinaus ist es außerdem sinnvoll zusätzlich den momentanen Ertrag der Solaranlage bei der Absenkung der Solltemperatur zu berücksichtigen, indem anhand des momentanen Solarertrages die momentane Leistung abgeschätzt wird und der ermittelte Wert beispielsweise stundenweise aktualisiert wird. Um den erforderlichen Brauchwasserkomfort zu garantieren, bleibt die untere Grenze für die Absenkung auch hier bei 45°C.

Wird das Verfahren alternativ oder zusätzlich zur Steuerung der Gebäudebeheizung eingesetzt, wird von der Steuereinheit 16 anhand des Temperaturdifferenzwertes 2,5 ebenfalls eine korrigierter Solltemperaturwert TSV für die Vorlauftemperatur des Heizungskreises 40 von beispielsweise 55 °C ermittelt, der der Steuer-/Regeleinrichtung 50 ebenfalls über die Bus-Verbindung 51 übermittelt wird. Dabei wird zugrundegelegt, dass die zu erwartende Sonneneinstrahlung als passiver Strahlungsgewinn eine Aufheizung des zu beheizenden Raumes vornimmt und dass die Vorlauftemperatur des Heizungskreises 40 zur Beheizung des Raumes um den entsprechenden Betrag reduziert werden kann.

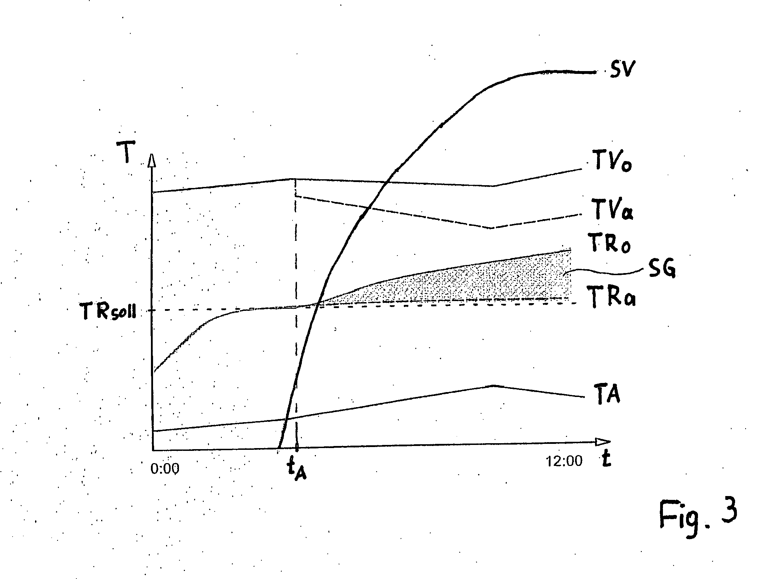

Zur Verdeutlichung sind in Figur 3 bezüglich der Gebäudebeheizung die Temperaturverläufe T über der Zeit t dargestellt. Mit SV ist der Strahlungsverlauf der Solarstrahlung dargestellt, der beispielsweise über die Kollektortemperatur abgeleitet wird. Mit TRsoll ist die eingestellte und gewünschte Solltemperatur für den Raum, mit TA die Außentemperatur, mit TRo die Raumtemperatur ohne Absenkung der Vorlauftemperatur, mit TRa die Raumtemperatur mit Absenkung der Vorlauftemperatur, mit TVo die Vorlauftemperatur ohne Absenkung und mit TVa die Vorlauftemperatur mit Absenkung bezeichnet. Mit Beginn oder kurz nach dem Beginn des zu erwartenden Strahlungseintrages ist der Zeitpunkt der Absenkung mit tA festgelegt. Die Raumtemperatur ohne Absenkung TRo steigt mit eintretender Sonnenstrahlung über die eingestellte und gewünschte Solltemperatur des Raumes TRsoll an. Durch den in Figur 3 schraffiert dargestellten passiven Strahlungsgewinn SG tritt eine Überhitzung des Raumes ein. Um dies zu vermeiden, wird die eingestellt Vorlaufsolltemperatur auf den korrigierten Vorlaufsolltemperaturwert TSV anhand des zu erwartenden Solarertrages reduziert. Mit dem Zeitpunkt tA wird die Vorlauftemperatur des Heizungskreises 40 gemäß dem dargestellten Verlauf TVa abgesenkten. Die abgesenkte Vorlauftemperatur TVa kann zusätzlich zur Absenkung auf den Vorlaufsolltemperaturwert TSV anhand einer Abschätzung des momentanen Ertrages der Solaranlage weiter korrigiert werden. Eine daraus folgende, weitere Absenkung des Vorlauftemperatur zeigt der abfallende Verlauf von TVa in Figur 3, d. h., dass mit zunehmendem aktuellen Solarertrag auch die Vorlauftemperatur des Heizungskreises 40 weiterer gesenkt wird, weil damit zu rechnen ist, dass der bei der Abschätzung des zu erwartenden Solarertrages nicht berücksichtigte zusätzliche Solarertrag zusätzlichen zur Aufheizung des Raumes bzw. des Gebäudes beiträgt. Dadurch führt der auf der Basis der Vorhersage des zu erwartenden Solarertrages abgesenkte Solltemperaturwert TSV der Vorlauftemperatur des Heizungskreises 40 dazu, dass die anhand der Vorhersage mit hoher Wahrscheinlichkeit eintretende Sonneneinstrahlung tagsüber nicht zu einer über die gewünschte Raumtemperatur TRsoll hinausgehenden Überhitzung des Raumes oder des Gebäudes führt. Durch die Absenkfunktion der Vorlauftemperatur des Heizungskreises 40 werden somit die passiven Strahlungsgewinne berücksichtigt und genutzt, ohne dass die Raumtemperatur den Sollwert wesentlich überschreitet. Dadurch wird aus fossilen Brennstoffen gewonnene Energie zur Gebäudebeheizung eingespart und außerdem ein höherer Raumkomfort gewährleistet.

### Bezugszeichenliste

- 10: Solaranlage
- 11: Solarkollektor
- 12: Solarkreis
- 13: Solarkreis-Umwälzpumpe
- 15: Temperaturfühler
- 16: Steuereinrichtung
- 17: unterer Temperaturfühler
- 20: Heizgerät
- 21: Brauchwasserladekreis
- 22: Vorlauf
- 23: Rücklauf
- 26: interner Heizkreis .
- 27: Primärwärmetauscher
- 28: Drei-Wege-Ventil
- 30: Warmwasserbereitungsanlage
- 31: Warmwasserspeicher
- 32: Brauchwasserentnahmeleitung
- 33: Anschluss für Kaltwasserzufuhr
- 34: erster Wärmetauscher
- 35: zweiter Wärmetauscher
- 36: Vorlaufleitung
- 37: Rücklaufleitung
- 40: Heizungskreis
- 41: Vorlaufleitung
- 42: Rücklaufleitung
- 44: Raumheizkörper
- 49: Temperaturfühler
- 50: Steuer-/Regeleinrichtung
- 51: Bus-System
- QSS: normierte Tagessolarstrahlungssumme
- TA: Außentemperatur
- TSW: korrigierter Solltemperaturwert für Warmwasserbereitung
- TSV: korrigierter Solltemperaturwert für Gebäudebeheizung

- ΔT: Temperaturdifferenzwert
- SV: Strahlungsverlauf
- TVo: Vorlauftemperatur ohne Absenkung
- TVa: Vorlauftemperatur mit Absenkung
- TRo: Raumtemperatur ohne Absenkung
- TRa: Raumtemperatur abgesenkt
- SG: passiver Strahlungsgewinn
- Q_tag: Strahlungssumme für den aktuellen Tag
- Q_tag_max: maximal mögliche tägliche Strahlungssumme

## Patentansprüche

1. Verfahren zum Betreiben eines Wärmeerzeugers mit einer Solaranlage zur Warmwasserbereitung und/oder zur Gebäudebeheizung, wobei die Solaranlage mindestens einen Solarkollektor aufweist, der an einen Solarkreis angeschlossen ist, in dem eine Solarflüssigkeit als wärmeübertragendes Medium zirkuliert, wobei mittels der Solarflüssigkeit die aus der Solarenergie gewonnene Wärme auf das Wasser eines Warmwasserspeichers zur Warmwasserbereitung und/oder auf das Heizmedium eines Heizungskreises zur Gebäudebeheizung übertragen wird, wobei die Temperatur des Wasser im Warmwasserspeicher und/oder die Temperatur des Heizmediums im Heizungskreis jeweils auf einen Solltemperaturwert geregelt wird, und wobei ein zu erwartender Solarertrag der Solaranlage berücksichtigt wird, **dadurch gekennzeichnet, dass** zur Vorausbestimmung des zu erwartenden Solarertrages der Wärmestrahlungsaustausch des Solarkollektors mit dem Himmel herangezogen wird und dass anhand des zu erwartenden Solarertrages der Solltemperaturwert auf einen korrigierten Solltemperaturwert eingestellt wird.

2. Verfahren nach Anspruch 1, **dadurch gekennzeichnet, dass** als Wärmestrahlungsaustausch des Solarkollektors ein die Wärmeabstrahlung des Solarkollektors berücksichtigender Parameter herangezogen wird, und dass der die Wärmeabstrahlung des Sollkollektors berücksichtigende Parameter durch einen Temperaturdifferenzwert gebildet wird, der aus der Temperatur des Solarkollektors und aus der Umgebungstemperatur des Solarkollektors abgeleitet wird.

3. Verfahren nach Anspruch 2, **dadurch gekennzeichnet, dass** zur Bestimmung des Temperaturdifferenzwertes die Temperatur des Solarkollektors und die Umgebungstemperatur des Solarkollektors über eine vorbestimmte Zeitspanne erfasst wird, dass aus der erfassten Temperatur des Solarkollektors ein Mittelwert der Kollektortemperatur und aus der erfassten Umgebungstemperatur ein weiterer Mittelwert der Umgebungstemperatur gebildet wird, und dass aus der Differenz der beiden Mittelwerte der Temperaturdifferenzwert ermittelt wird.

4. Verfahren nach Anspruch 3, **dadurch gekennzeichnet, dass** die Temperatur des Solarkollektors und die Umgebungstemperatur in der vorausgegangen Nacht erfasst wird, wobei die Mittelwerte für die Kollektortemperatur und die Umgebungstemperatur vorzugsweise jeweils aus den zwischen vier Uhr und sechs Uhr morgens erfassten Temperaturen gebildet werden.

5. Verfahren nach einem der Ansprüche 2 bis 4, **dadurch gekennzeichnet, dass** als Umgebungstemperatur des Solarkollektors die von einem Außentemperaturfühler der Heizungsregelung gemessene Außentemperatur herangezogen wird.

6. Verfahren nach einem der vorhergehenden Ansprüche, **dadurch gekennzeichnet, dass** der korrigierte Solltemperaturwert anhand einer Steuerkennlinie ermittelt wird, die eine identifizierte normierte Tagessolarstrahlungssumme und den die Wärmeabstrahlung des Solarkollektors berücksichtigenden Parameter berücksichtigt.

7. Verfahren nach Anspruch 6, **dadurch gekennzeichnet, dass** jahreszeitbedingt mindestens zwei Steuerkennlinien gebildet werden, wobei die eine Steuerkennlinie für einen Jahreszeitabschnitt mit einer mittleren Außentemperatur < 10°C und die zweite Steuerkennlinie für einen Jahreszeitabschnitt mit einer mittleren Außentemperatur > 10°C zugrunde gelegt wird.

8. Verfahren nach Anspruch 6 oder 7, **dadurch gekennzeichnet, dass** unter Zugrundelegung der Steuerkennlinie eine Absenkung der Solltemperatur eines Warmwasserspeichers der Warmwasserbereitungsanlage auf den korrigierter Solltemperaturwert erfolgt.

9. Verfahren nach Anspruch 6 oder 7, **dadurch gekennzeichnet, dass** unter Zugrundelegung der Steuerkennlinie eine Absenkung der Solltemperatur eines Heizungskreises des Wärmeerzeugers, insbesondere der Vorlauftemperatur auf den korrigierter Solltemperaturwert erfolgt.

10. Verfahren nach einem der Ansprüche 6 bis 9, **dadurch gekennzeichnet**, **dadurch gekennzeichnet, dass** die Steuerkennlinie selbstlernend unter Heranziehung eines tagsüber ermittelten Solarertrages korrigiert wird.
